# EUROPÄISCHE PATENTSCHRIFT

(11) **EP 3 303 453 B1**
(45) Veröffentlichungstag und Bekanntmachung des Hinweises auf die Patenterteilung: **08.06.2022**
(21) Anmeldenummer: 16727150.1
(22) Anmeldetag: 24.05.2016
(51) Int. Cl.: C08G 77/388, C08G 77/46, D06M 15/647

(54) **POLYURETHAN-ORGANOPOLYSILOXANE**
POLYURETHANE-ORGANOPOLYSILOXANES
ORGANOPOLYSILOXANES-POLYURÉTHANES

(30) Priorität: 26.05.2015 DE 102015209627
(43) Veröffentlichungstag der Anmeldung: 11.04.2018
(73) Patentinhaber: Rudolf GmbH, 82538 Geretsried (DE)
(72) Erfinder: DEHM, Volker, 92283 Lauterhofen (DE); DUSCHEK, Gunther, 83671 Benediktbeuern (DE); HAYESSEN, Rainer, 82538 Geretsried (DE); SIELEMANN, Dirk, 82515 Wolfratshausen (DE); TEICHERT, Martin, 82515 Wolfratshausen (DE); SCHUBERT, Maximilian, 82538 Geretsried (DE)
(74) Vertreter: Weickmann & Weickmann PartmbB
(86) Internationale Anmeldenummer: PCT/EP2016/061684
(87) Internationale Veröffentlichungsnummer: WO 2016/188994

(56) Entgegenhaltungen:
- DE-A1-102005 056 864
- US-B2- 7 348 392

## Beschreibung

Die Erfindung betrifft Polyurethan-Organopolysiloxane und deren Anwendungen, insbesondere zur Ausrüstung von textilen Flächengebilden und Textilfasern.

Aminogruppen-enthaltende Polysiloxane werden seit geraumer Zeit als Textilausrüstungsmittel eingesetzt. Bei den damit behandelten Textilien werden gute Weichgriffeffekte erreicht. Üblicherweise werden die Polysiloxane als flüssige Zubereitung, beispielsweise in Form von wässrigen Emulsionen, auf das Textil aufgebracht. Dabei werden zur verbesserten Emulgierbarkeit des Polysiloxans die Aminogruppen durch Zugabe einer Säure in der Formulierung protoniert.

Ein Problem der Zubereitungen, die aminofunktionelle Polysiloxane enthalten, ist die Empfindlichkeit der aus ihnen hergestellten Anwendungsflotten gegenüber pH-Wert-Schwankungen. So werden in diesen Systemen bei höheren pH-Werten, zum Beispiel bei einem pH-Wert >7, Ausfällungen des Polysiloxans bzw. Phasentrennung beobachtet. Dies ist darauf zurückzuführen, dass die Aminogruppen im basischen Bereich nicht mehr protoniert vorliegen. Ein homogener Auftrag des Weichgriffmittels ist unter diesen Bedingungen nicht mehr gewährleistet. Häufig kommt es dann auf dem Textil zur Bildung von Siliconflecken. Gerade beim Textilveredelungsprozess werden sehr viele Behandlungsschritte in stark alkalischem Milieu durchgeführt. Bei nicht gründlich durchgeführten Waschprozessen können Restmengen von Alkalien auf dem Substrat verbleiben und während der nachfolgenden Veredelungsschritte in die Behandlungsbäder eingeschleppt werden. Insbesondere auf Anlagen mit wenig Behandlungsflotte, wie zum Beispiel dem Foulard, kann dabei der pH-Wert der Ausrüstungsflotte in kürzester Zeit auf >9 ansteigen. So kommt es unter Umständen zu den erwähnten starken Ausfällungen.

In WO 2004/044306 und WO 03/095735 werden quaternäre Ammoniumgruppen enthaltende Polysiloxane beschrieben. Die quaternären Ammoniumgruppen liegen sowohl im sauren als auch im basischen pH-Wert-Bereich stets als kationische Gruppen vor. Daraus hergestellte Emulsionen besitzen eine gute Stabilität und führen in der Anwendung nur selten zu Flecken.

Ein weiterer Nachteil vieler Amino- bzw- Ammoniumgruppen enthaltenden Polysiloxane ist ihre Empfindlichkeit gegenüber anionischen Substanzen. Bei der Vorbehandlung, beim Waschen und beim Färben werden häufig anionische Tenside verwendet. Auch viele Nachbehandlungsmittel zur Verbesserung der Echtheit von Färbungen basieren auf anionischen Polymeren. Werden derartige Substanzen nicht gründlich ausgewaschen können diese im Veredlungsprozess beim Aufbringen des Weichgriffmittels stören, indem sie über Salzbildung die kationischen Ammoniumgruppen blockieren. Diese führt zu einer Destabilisierung der Emulsion in der Anwendungsflotte und häufig auch zur Entstehung von Siliconflecken.

Ammonium- und Polyether-modifizierte Organopolysiloxane werden in DE 10 2005 056 864 beschrieben. Die Polysiloxane werden aus einem Epoxy-funktionellen Organopolysiloxan, welches mit Aminen und Alkylalkoholalkoxylaten umgesetzt wird, hergestellt. Anschließend erfolgt eine Quaternierung mit einem Alkylierungsmittel. Die Organopolysiloxane werden zur Ausrüstung von textilen Substraten verwendet und zeichnen sich durch gute Weichgriffeffekte und eine hohe Vergilbungsresistenz aus. Aufgrund der endständigen Polyether- und Ammoniumgruppen besitzen diese Systeme eine gute pH-Wert Stabilität. Zudem eignen sich die dort beschriebenen Zubereitungen für den Einsatz in Kombination mit Hydrophobierungsmitteln, ohne die Öl- und Wasserabweisung negativ zu beeinflussen.

WO 2005/121218 beschreibt ein Verfahren zur Herstellung von Siloxan-Copolymeren, bei dem modifizierte Organopolysiloxane mit terminaler Hydroxygruppe mit Di- oder Polyisocyanaten umgesetzt werden. Die Verbindungen werden zur Weichgriff-Modifizierung von faserartigen Substraten verwendet und zeichnen sich auf diesen durch eine gute Hydrophilie aus.

US 7348392 B2 offenbart die Umsetzung eines mit terminalen Epoxygruppen substituierten Polysiloxans mit einem aminofunktionellen Polyether, um ein mit terminalen Aminogruppen substituiertes Polysiloxan zu bilden, das weiter mit Diisocyanaten reagiert. Überraschenderweise wurde nun gefunden, dass Polyurethan-Organopolysiloxane mit seitenständigen Polyethergruppen, herstellbar durch die Umsetzung von Hydroxy-modifizierten Organopolysiloxanen mit Di- oder Polyisocyanaten, hervorragende Weichgriffeffekte auf Textilien erzeugen. Die erfindungsgemäßen Polyurethan-Organopolysiloxane können im wässrigen Medium ohne oder mit nur geringen Mengen an zusätzlichen Tensiden emulgiert werden. Die sonst mit Tensiden einhergehenden negativen Einflüsse auf Schaumentwicklung und Farbstoffmigration können minimiert werden. Die Formulierungen die auf derartigen Polyurethan-Organopolysiloxanen basieren, besitzen in der Anwendung eine sehr gute pH-Wert- und Anionenstabilität sowie eine sehr gute Stabiltät gegenüber Scherbeanspruchung.

In einem ersten Aspekt betrifft die vorliegende Erfindung daher ein Polysiloxan erhältlich durch ein Verfahren, umfassend die Schritte:
(i) Bereitstellen mindestens eines Reaktionsprodukts (I) aus einer Verbindung (II) mit der Formel 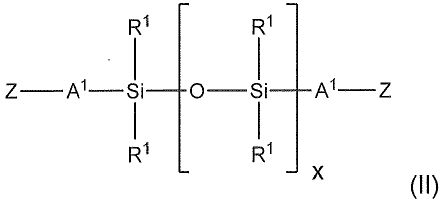 wobei
   R¹ gleich oder verschieden sein kann und einen gegebenenfalls substituierten Kohlenwasserstoffrest mit 1-18 Kohlenstoffatomen je Rest bedeutet,
   A¹ unabhängig voneinander eine zweiwertige lineare oder verzweigte Gruppe mit bis zu 8 Kohlenstoffatomen und gegebenenfalls mit bis zu 4 Heteroatomen bedeutet,
   x eine ganze Zahl von 1-1000, bevorzugt 1-500 ist, und
   Z 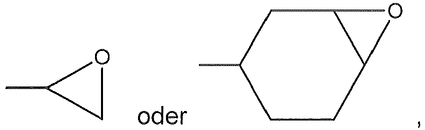 gegebenenfalls substituiert mit C₁₋₈-Alkyl, ist,
   mit mindestens einer Verbindung (III), ausgewählt aus primärem Amin, sekundärem Amin und Monoalkohol, die ggf. mindestens einen Polyetherrest enthält,
   wobei mindestens ein Reaktionsprodukt (I) mindestens einen Polyetherrest enthält, der durch Verbindung (III) eingeführt wurde;
(ii) gegebenenfalls Bereitstellen mindestens einer Verbindung (IV) mit der Formel 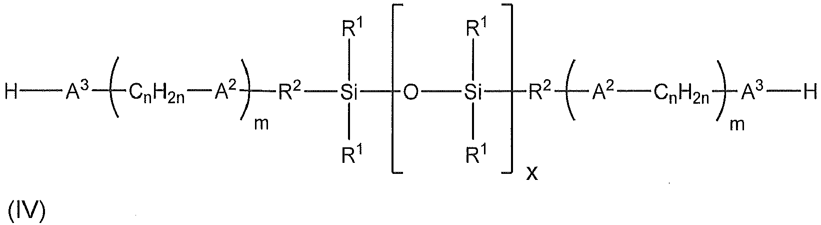 wobei
   R¹ und x wie oben definiert sind,
   R² unabhängig voneinander zweiwertiges verzweigtes oder lineares C₂₋₈-Alkyl, gegebenenfalls substituiert mit Carbonyl, ist,
   A² unabhängig voneinander ausgewählt ist aus der Gruppe aus -O-, -C(O)-O-, -O-C(O)-, -O-C(O)-O-, -C(O)-NH-, -NH-C(O)-, -NH-C(O)-O- und -NH-C(O)-NH-,
   A³ unabhängig voneinander ausgewählt ist aus der Gruppe aus -O-, -NH- und -NR'-,
   R' ein einwertiger Kohlenwasserstoffrest mit 1 bis 18 Kohlenstoffatomen ist,
   n unabhängig voneinander eine ganze Zahl von 1 bis 20, bevorzugt 2 oder 3 ist und
   m unabhängig voneinander eine ganze Zahl von 0-150, bevorzugt 0-70, stärker bevorzugt 0-30, ist;
(iii) gegebenenfalls Equilibrieren mindestens eines Reaktionsprodukts (I) und/oder mindestens einer Verbindung (IV) mit einem zyklischen oder linearen Polysiloxan, und
(iv) Umsetzen des Reaktionsprodukts (I) oder des equilibrierten Reaktionsprodukts (I) aus Schritt (iii) und gegebenenfalls der Verbindung (IV) oder der equilibrierten Verbindung (IV) aus Schritt (iii) mit mindestens einer organischen Verbindung (V), die pro Molekül mindestens zwei Isocyanatgruppen aufweist.

Im Schritt (i) wird das Reaktionsprodukt (I) durch Reaktion der Verbindung (II) 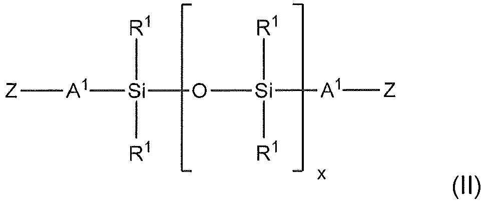 mit der Verbindung (III) erhalten.

In einer bevorzugten Ausführungsform der Erfindung ist R¹ unabhängig voneinander ein Kohlenwasserstoffrest mit 1-18 Kohlenstoffatomen je Rest. Bevorzugt ist der Kohlenwasserstoffrest unabhängig voneinander C₁₋₁₈-Alkyl, Aryl, wie z.B. Phenyl, Naphthyl, Anthryl oder Phenanthryl, Alkaryl, wie z.B. Toluol, oder Aralkyl, wie z.B. Benzyl.

Alkyl oder durch die Anzahl der Kohlenstoffatome definiertes Alkyl, z.B. C₁₋₁₈-Alkyl, bedeutet in der vorliegenden Erfindung einen linearen, verzweigten oder zyklischen gesättigten Kohlenwasserstoffrest. In einer bevorzugten Ausführungsform umfasst ein C₁₋₁₈-Alkyl-Rest beispielsweise einen Methyl-, Ethyl-, n-Propyl-, Isopropyl-, n-Butyl-, Isobutyl-, tert.-Butyl-, n-Pentyl-, Isopentyl-, Neopentyl-, tert.-Pentyl-, n-Hexyl-, Isohexyl-, n-Heptyl-, Isoheptyl-, n-Octyl-, Isooctyl-, n-Nonyl-, Isononyl-, n-Decyl-, Isodecyl-, n-Dodecyl-, Isododecyl-, n-Octadecyl- und C₃₋₁₈-Cycloalkyl-Rest, wie zum Beispiel einen Cyclopentyl-, Cyclohexyl-, Cycloheptyl- und Methylcyclohexyl-Rest.

Stärker bevorzugt ist R¹ ausgewählt aus der Gruppe aus C₁₋₆-Alkyl, Aryl oder Aralkyl, stärker bevorzugt C₁₋₆-Alkyl, Aryl oder Benzyl, noch stärker bevorzugt C₁₋₆-Alkyl, noch stärker bevorzugt Methyl oder Ethyl, und am stärksten bevorzugt Methyl.

Der Kohlenwasserstoff kann ferner substituiert sein. Geeignete Substituenten sind bevorzugt Halogen, wie zum Beispiel Fluor, Chlor, Brom und lod sowie Hydroxy.

A¹ ist unabhängig voneinander eine zweiwertige lineare oder verzweigte Gruppe mit bis zu 8 Kohlenstoffatomen und gegebenenfalls mit bis zu 4 Heteroatomen, wie zum Beispiel Sauerstoff, Schwefel oder Stickstoff. Bevorzugt ist A¹ eine zweiwertige lineare oder verzweigte Gruppe mit bis zu 8 Kohlenstoffatomen und gegebenenfalls mit einem Heteroatom, insbesondere Sauerstoff.

In einer bevorzugten Ausführungsform ist A¹ C₁₋₈-Alkyl oder -C₁₋₆-Alkyl-O-C₁₋₆-Alkyl-. In einer besonders bevorzugten Ausführungsform ist A¹ C₂₋₃-Alkyl-O-C₁₋₃-Alkyl, stärker bevorzugt -CH₂-CH₂-CH₂-O-CH₂-.

Z ist eine Epoxydgruppe ausgewählt aus 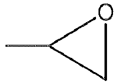 oder 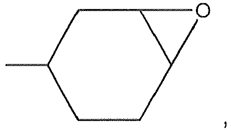 gegebenenfalls substituiert mit C₁₋₈-Alkyl.

Bevorzugt ist Z

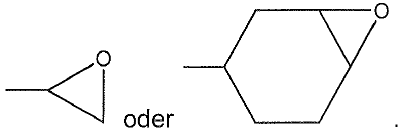

x ist eine ganze Zahl von 1-1000, bevorzugt von 1-500, stärker bevorzugt von 1-250.

In einer bevorzugten Ausführungsform ist die Verbindung (II)

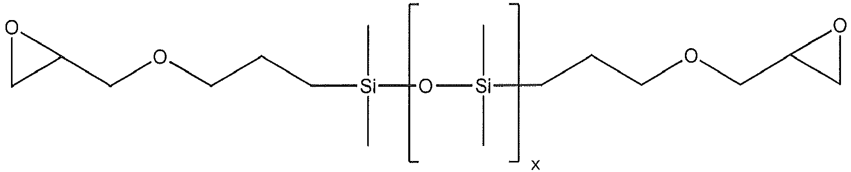

Die Verbindung (III) ist ein primäres Amin, d.h. RNH₂, ein sekundäres Amin, d.h. R₂NH oder ein Monoalkohol, d.h. R-OH, wobei R jeweils unabhängig einen organischen Rest darstellt, wobei mindestens ein R in Verbindung (III) einen Polyetherrest enthalten kann. Als Polyetherrest wird vorliegend eine Gruppierung der Formel (-CₙH₂ₙ-O-)ₘ verstanden, mit n und m wie hierin definiert.

Die Verbindung (III) ist bevorzugt ausgewählt aus 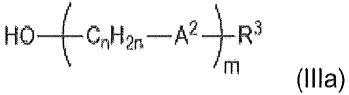 und

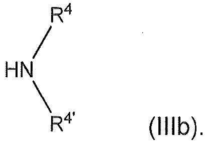

A² ist unabhängig voneinander ausgewählt aus der Gruppe aus -O-, -C(O)-O-, -O-C(O)-, -O-C(O)-O-, -C(O)-NH-, -NH-C(O)-, -NH-C(O)-O- und -NH-C(O)-NH-, bevorzugt -O-, stärker bevorzugt jeweils -O-.

n ist unabhängig voneinander eine ganze Zahl von 1 bis 20, bevorzugt 2 bis 5, stärker bevorzugt 2 oder 3.

m ist eine ganze Zahl von 0-150, bevorzugt 0-70, stärker bevorzugt 0-30 und am stärksten bevorzugt 1-30. In einer anderen Ausführungsform ist m 1-70, bevorzugt 1-30, stärker bevorzugt 5-30. Bevorzugt ist m in Formel (IIIa) 1-70, stärker bevorzugt 5-70 und am stärksten bevorzugt 1-30.

R³ ist C₁₋₂₂-Alkyl, C₂-C₂₂-Alkenyl, C₂-C₂₂-Alkinyl, C₆₋₂₂-Alkaryl, wie z.B. Toluol, C₆₋₂₂-Aralkyl, wie z.B. Benzyl oder Aryl, z.B. Phenyl, Naphthyl, Anthryl oder Phenanthryl, gegebenenfalls substituiert mit mindestens einem Styryl. Bevorzugt ist R³ C₁₋₂₂-Alkyl, C₂-C₂₂-Alkenyl, C₂-C₂₂-Alkinyl, C₆₋₂₂-Alkaryl, wie z.B. Toluol, oder Aryl, z.B. Phenyl, Naphthyl, Anthryl oder Phenanthryl, gegebenenfalls substituiert mit mindestens einem Styryl. Stärker bevorzugt ist R³ ausgewählt aus C₁₋₂₂-Alkyl, C₂-C₂₂-Alkenyl, C₂-C₂₂-Alkinyl, Phenyl, Toluol und Tristyrylphenyl. Am stärksten bevorzugt ist R³ ausgewählt aus C₁₋₂₂-Alkyl und Phenyl.

R⁴ ist H, C₁₋₈-Alkyl, Aryl, wie z.B. Phenyl oder -(CₙH₂ₙ-A²)ₘ-R³. Bevorzugt ist R⁴ H, Methyl, Ethyl, Cyclohexyl, Phenyl oder -(CₙH₂ₙ-O)ₘ-R³.

R^{4'} ist C₁₋₈-Alkyl, Aryl oder -(CₙH₂ₙ-A²)ₘ-R³. Bevorzugt ist R^{4'} Methyl, Ethyl, Cyclohexyl, Phenyl und -(CₙH₂ₙ-O)ₘ-R³.

Als Monoalkohol (IIIa) werden besonders bevorzugt Alkoxylierungsprodukte aliphatischer Alkohole mit 1-22 Kohlenstoffatomen verwendet. Der Alkylenoxidrest ist bevorzugt aus Ethylenoxid- und/oder Propylenoxideinheiten aufgebaut. Die Bausteine können in statistischer oder blockartiger Verteilung vorliegen. Besonders bevorzugt sind aliphatische Alkoholethoxylate mit einem Ethoxylierungsgrad von 1-30.

Als Verbindung (IIIb) werden insbesondere Methyl-verschlossene alkoxylierte primäre Monoamine, die kommerziell unter dem Handelsnamen Jeffamine^{®} erhältlich sind, verwendet.

Bevorzugt wird zur Herstellung des Reaktionsprodukts (I) ein stöchiometrisches Verhältnis von Epoxidgruppe zu Verbindung (III) (primäres Amin, sekundäres Amin oder Monoalkohol) von 1:1 gewählt.

Die Herstellung des Reaktionsprodukts (I) erfolgt nach Methoden, welche dem Fachmann bekannt sind. Die Verbindung (II) kann ausgehend von Siloxanen mit terminalen Si-H-Einheiten einer Hydrosilylierung, wie zum Beispiel in DE 1493384 und US 4,891,166 beschrieben, unterzogen werden. Die Additionsreaktion zum Reaktionsprodukt (I) ist variabel; Verbindung (II) oder Verbindung (III) wird vorgelegt und die jeweils andere Verbindung wird dann bei Temperaturen zwischen 100-200 °C unter Rühren zugetropft. Die Additionsreaktion kann aber auch durch Mischen der Verbindungen (II) und (III) unter Rühren bei erhöhter Temperatur (z.B. bei 100-200 °C) durchgeführt werden. Die Umsetzung kann unter Verwendung von basischen Katalysatoren, wie z.B. Natriumhydroxid oder Kaliummethylat, zum Reaktionsprodukt (I) erfolgen, wie beispielsweise in US 6,495,727 beschrieben. Alternativ kann die Umsetzung in Gegenwart von sauren Katalysatoren, wie z.B. Bortrifluorid-Diethyletherat, zum Reaktionsprodukt (I) erfolgen, wie z.B. in EP 0 002 519 (Beispiel 1) beschrieben.

Ist die Mischbarkeit der beiden Edukte schlecht, kann die Zugabe eines nicht-protischen Lösungsmittels hilfreich sein.

Bei der Umsetzung zum Reaktionsprodukt (I) erfolgt ein nucleophiler Angriff der Amin- und/oder der Alkohol-Gruppe der Verbindung (III) auf die Epoxidgruppe der Verbindung (II), welcher eine Ringöffnung des Epoxids und Bildung einer Hydroxylgruppe zur Folge hat. Die bei der Additionsreaktion gebildete Hydroxygruppe ist Isocyanat-reaktiv und kann im Schritt (iv) mit der Verbindung (V) reagieren, wodurch seitenständige Polyethergruppen gebildet werden.

Im Schritt (i) wird bevorzugt nur ein Reaktionsprodukt (I) bereitgestellt, wobei das Reaktionsprodukt mindestens einen Polyetherrest enthält. Sofern Mischungen von Reaktionsprodukten (I) eingesetzt werden, enthalten bevorzugt mindestens 40 bis 100 mol%, stärker bevorzugt 60 bis 100 mol%, aller Reaktionsprodukte (I) mindestens einen Polyetherrest.

Im Schritt (ii) wird ggf. mindestens eine Verbindung (IV) mit der Formel 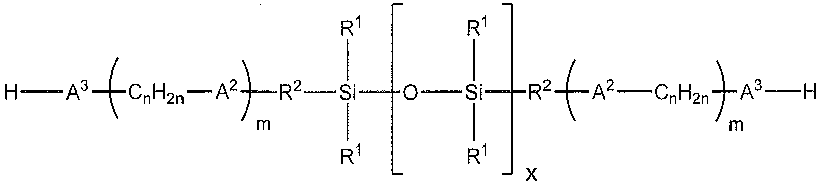 bereitgestellt, wobei
R¹ gleich oder verschieden ist und einen gegebenenfalls substituierten Kohlenwasserstoffrest mit 1-18 Kohlenstoffatomen je Rest darstellt. In einer bevorzugten Ausführungsform der Erfindung ist R¹ unabhängig voneinander ein Kohlenwasserstoffrest mit 1-18 Kohlenstoffatomen je Rest. Bevorzugt ist der Kohlenwasserstoffrest unabhängig voneinander C₁₋₁₈-Alkyl, Aryl, wie z.B. Phenyl, Naphthyl, Anthryl oder Phenanthryl, Alkaryl, wie z.B. Toluol, oder Aralkyl, wie z.B. Benzyl.

Bevorzugt ist R¹ ausgewählt aus der Gruppe aus C₁₋₆-Alkyl, Aryl oder Aralkyl, stärker bevorzugt C₁₋₆-Alkyl, Aryl oder Benzyl, noch stärker bevorzugt C₁₋₆-Alkyl, noch stärker bevorzugt Methyl oder Ethyl, und am stärksten bevorzugt Methyl.

Der Kohlenwasserstoff kann ferner substituiert sein. Geeignete Substituenten sind bevorzugt Halogen, wie zum Beispiel Fluor, Chlor, Brom und lod sowie Hydroxy.

R² ist unabhängig voneinander zweiwertiges verzweigtes oder lineares C₂₋₈-Alkyl, gegebenenfalls substituiert mit Carbonyl. In einer bevorzugten Ausführungsform ist R² unabhängig voneinander ein zweiwertiges verzweigtes oder lineares C₂₋₈-Alkyl, insbesondere Ethyl, n-Propyl oder n-Butyl, bevorzugt n-Propyl.

A² ist unabhängig voneinander ausgewählt aus der Gruppe aus -O-, -C(O)-O-, -O-C(O)-, -O-C(O)-O-, -C(O)-NH-, -NH-C(O)-, -NH-C(O)-O- und -NH-C(O)-NH-, bevorzugt -O-, stärker bevorzugt jeweils -O-.

A³ ist unabhängig voneinander ausgewählt aus der Gruppe aus -O-, -NH- und -NR'-, wobei R' ein einwertiger Kohlenwasserstoffrest mit 1 bis 18 Kohlenstoffatomen, bevorzugt C₁₋₁₈-Alkyl, stärker bevorzugt Methyl oder Ethyl ist. Bevorzugt ist A³ jeweils -O-.

n ist unabhängig voneinander eine ganze Zahl von 1 bis 20, bevorzugt 2 oder 3, besonders bevorzugt 2.

m ist eine ganze Zahl von 0-150, bevorzugt 0-70, stärker bevorzugt 0-30 und am stärksten bevorzugt 1-30. In einer anderen Ausführungsform ist m 1-70, bevorzugt 1-30.

x ist eine ganze Zahl von 1-1000, bevorzugt von 1-500, stärker bevorzugt von 1-250.

In einer besonders bevorzugten Ausführungsvariante ist die Verbindung der Formel (IV) 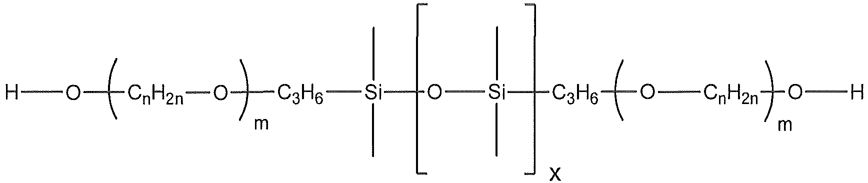 mit n gleich 2 und/oder 3.

Die Reaktion mit der Isocyanatverbindung (V) kann somit über die endständige Isocyanat-reaktive OH-Gruppe erfolgen.

Das Reaktionsprodukt (I) und Verbindung (IV) können entweder in einer Mischung oder getrennt voneinander vorliegen.

Die Herstellung der Verbindung (IV) kann analog zur Herstellung von Verbindung (II) über eine Hydrosilylierung erfolgen, wie dem Fachmann bekannt ist.

Gemäß Schritt (iii) wird das Reaktionsprodukt (I) und/oder die Verbindung (IV) gegebenenfalls mit einem cyclischen oder linearen Polysiloxan equilibriert. Equilibrierungsreaktionen sind dem Fachmann bekannt. Durch die Equilibrierungsreaktion werden die Siloxaneinheiten in den Verbindungen (I) und (IV) gespalten, wobei die Fragmente statistisch rekombinieren. Bei der Equilibrierungsreaktion kann ggf. die Anzahl x der Siloxan-Wiederholungseinheiten in den Verbindungen (I) und/oder (IV), bei gleichzeitigem Abbau des zugesetzten Polysiloxans, erhöht werden. Bevorzugt kann im Schritt (iii) x von 1 auf bis zu 1000, bevorzugt auf bis zu 500, stärker bevorzugt auf bis zu 250, erhöht werden. Die Equilibrierung erfolgt bevorzugt unter basischer oder saurer, bevorzugt basischer Katalyse, unter Rühren bei Temperaturen von 100-180 °C.

Der Katalysator wird nach der Reaktion neutralisiert und gegebenenfalls abgetrennt. Flüchtige Bestandteile werden gegebenenfalls abdestilliert.

Geeignete basische Katalysatoren sind Alkalimetallhydroxide, Alkalimetallalkoholate, Tetramethylammoniumhydroxid, Tetramethylphosphoniumhydroxid. Als saure Katalysatoren können z.B. Schwefelsäure, Trifluormethansulfonsäure oder saure lonenaustauscherharze eingesetzt werden.

Als bevorzugtes cyclisches oder lineares Polysiloxan wird im Schritt (iii) Polydi-C₁₋₆-Alkyl-Siloxan, stärker bevorzugt Polydimethylsiloxan, stärker bevorzugt Oligodimethylsiloxan, noch stärker bevorzugt cyclisches Oligo- oder Polydimethylsiloxan verwendet. Insbesondere sind Hexamethylcyclotrisiloxan, Octamethylcyclotetrasiloxan, Decamethylcyclopentasiloxan und Mischungen dieser geeignet.

Die oben genannten linearen Polysiloxane sind bevorzugt mit C₁₋₈-Alkyl, besonders bevorzugt mit Hydroxygruppen terminiert. Besonders bevorzugt ist α,ω-OH- terminiertes lineares Polydimethyldisiloxan.

Im Schritt (iv) wird das Reaktionsprodukt (I) oder das equilibrierte Reaktionsprodukt (I) aus Schritt (iii) und gegebenenfalls die Verbindung (IV) oder die equilibrierte Verbindung (IV) aus Schritt (iii) mit mindestens einer organischen Verbindung (V), die pro Molekül mindestens 2 Isocyanatgruppen aufweist, umgesetzt.

In einer bevorzugten Ausführungsform ist im Schritt (iv) x im Reaktionsprodukt (I) oder im equilibrierten Reaktionsprodukt (I) aus Schritt (iii) und ggf. in Verbindung (IV) oder im equilibrierten Reaktionsprodukt (IV) aus Schritt (iii) 10 bis 1000 und bevorzugt 10 bis 500.

Bevorzugt ist die Verbindung (V) ausgewählt aus Hexamethylen-1,6-diisocyanat, Isophorondiisocyanat, Toluylen-2,4-diisocyanat, Toluylen-2,6-diisocyanat, Phenylen-1,3-diisocyanat, 4,4'-Methylenbis(cyclohexylisocyanat), 4,4'-Methylen-bis(phenylisocyanat) und Dimethylphenyldiisocyanat, besonders bevorzugt ist Hexamethylen-1,6-diisocyanat und Isophorondiisocyanat.

Schritt (iv) wird unter solchen Bedingungen durchgeführt, dass die im Reaktionsprodukt (I) durch Öffnung des Expoxidrings entstandene Hydroxygruppe mit der Isocyanatgruppen-enthaltenden Verbindung (V) reagiert. Enthält das Reaktionsprodukt (I) sekundäre Aminogruppen, ist das hieraus entstandene sekundäre Amin Isocyanat-reaktiv.

Die Reaktion erfolgt üblicherweise bei Temperaturen oberhalb Raumtemperatur (20 °C), gegebenenfalls unter Verwendung mindestens eines Lösungsmittels und/oder eines Katalysators. In einer bevorzugten Ausführungsform wird die Reaktion bei 30 bis 100 °C, stärker bevorzugt bei 40 bis 80 °C, durchgeführt. Sofern ein Lösungsmittel verwendet wird, eignen sich hierfür insbesondere nicht-protische Lösungsmittel wie z.B. Aceton, Methylpropylketon, Ethylacetat und Isopropylacetat. Diese werden nach der Reaktion destillativ entfernt. Es können jedoch auch wasserlösliche Lösungsmittel verwendet werden, die nach der Reaktion im Produkt verbleiben und bei der Emulgierung des Polyurethan-Organopolysiloxans hilfreich sein können. Beispiele hierfür sind Dipropylenglykoldimethylether und Propylenglykolmethyletheracetat. Als Katalysator kommen insbesondere Di-n-butylzinndilaurat, Zinn(II)-octoat, Dibutylzinndiacetat, Kaliumoctoat, Zink-dilaurat, Wismuttrilaurat oder tertiäre Amine, wie Dimethylcyclohexylamin, Dimethylaminopropyldipropanolamin, Pentamethyldipropylentriamin, N-Methylimidazol oder N-Ethylmorpholin in Betracht.

Im Schritt (iv) kann ferner mindestens eine Verbindung (VI), die mindestens eine Isocyanat-reaktive Gruppe, z.B. -OH, -NH₂ oder -NHR, enthält, zugegen sein. In einer bevorzugten Ausführungsform ist die Verbindung (VI) ausgewählt aus

R⁴-(A²-CₙH₂ₙ)ₘ-A³-H,

HO-R⁵-NR⁶-R⁵-OH,

HO-R⁵-NR⁶R^{6'},

HO-R⁵(NR⁶R^{6'})₂,

HO-R⁵(NR⁶R^{6'})₃,

(HO)₂R⁵-NR⁶R^{6'},

HNR⁶R^{6'},

H₂N-R⁵-NR⁶R^{6'},

R^{6'}R⁶N-R⁵-NR⁶-R⁵-NR⁶R^{6'}, und

R^{6'}R⁶N-R⁵-NR⁶R^{6'},

wobei
R⁴, A², A³, n und m wie oben definiert sind,
R⁵ unabhängig voneinander gegebenenfalls substituiertes zweiwertiges, dreiwertiges oder vierwertiges C₁₋₈-Alkyl, C₁₋₈-Alkyl-O-C₁₋₈-Alkyl oder Aryl, z.B. Phenyl, ist,
R⁶ H, gegebenenfalls substituiertes C₁₋₁₈-Alkyl oder Aryl, z.B. Phenyl, ist, und
R^{6'} gegebenenfalls substituiertes C₁₋₁₈-Alkyl oder Aryl, z.B. Phenyl, ist, oder
R⁶ und R^{6'} mit dem Stickstoffatom einen Heterozyklus bilden, der gegebenenfalls weitere Heteroatome, wie beispielsweise O, S und N, bevorzugt O, enthalten kann und gegebenenfalls substituiert ist mit C₁₋₈-Alkyl. So bilden R⁶ und R^{6'} mit dem Stickstoffatom bevorzugt einen Piperazin-, Piperidin-, Pyrrolidin- oder Morpholin-Rest, der gegebenenfalls substituiert ist mit C₁₋₈-Alkyl.

R⁵, R⁶, R^{6'} sind - sofern nicht unsubstituiert - unabhängig voneinander bevorzugt substituiert mit Hydroxylgruppen.

Bevorzugt sind die Verbindungen (VI) ausgewählt aus Methylpolyethylenoxid, Butylpolyethylenoxid, Methylpolyethylenoxid/ propylenoxid, Methylpropylenoxid, N-Methyldiethanolamin, N-Methyldiproanolamin, Dimethylaminopropyl-dipropanolamin, N-Dodecyldiethanolamin und N-Stearyldipropanolamin, N,N-Dimethylethanolamin, N,N-Diethylpropanolamin, N,N-Dimethylaminoproylmethylethanolamin, Dimethyl-2-(2)aminoethoxy) ethanol, 1,5-Bis(dimethylamino)-pentan-3-ol, 1,5-Bis(methylamino)-pentan-3-ol, 1,7-Bis(dimethylamino)-heptan-4-ol, N,N-Bis-(3-dimethylaminpropyl)-N-isopropanolamin, 2,4,6-tris(Dimethylaminomethyl)-phenol, 1,1,1-Tris(dimethylaminomethyl)-methanol, 2,4,6-Tris(dimethylaminomethyl)cyclohexanol, N,N-Bis(dimethylaminopropyl)-3-aminopropan-1,2-diol, N,N-Bis(dimethylaminopropyl)-2-aminopropan-1,3-diol, N,N-Bis(3-dimethylaminopropyl)-carbaminosäuremonoglycerid, Dibutylamin, Octylamin, Benzylamin, 3-(Cyclohexylamino)-propylamin, 2-(Diethylamino)-ethylamin, Dipropylentriamin, Isophorondiamin, Dimethylaminopropylmethylamin, N,N-Bis(dimethylaminopropyl)-amin, Dimethylaminopropylamin, N,N,N'-Trimethyl-N'-hydroxyethylbisaminoethylether, N-(3-dimethylaminopropyl)-N,N-diisopropanolamin, N-(3-Dimethylaminopropyl)-N,N-diisopropanolamin, 2-(2-Dimethylaminoethoxy)ethanol, N,N,N'-Trimethylaminoethyl-ethanolamin, Pyrrolidin, Piperidin, N-Methylpiperazin, und Morpholin.

Besonders bevorzugt sind die Verbindungen (VI) ausgewählt aus N-Methyldiethanolamin, N,N-Dimethylethanolamin, N,N-Bis(dimethylaminopropyl)-amin, N,N,N'-Trimethyl-N'hydroxyethylbisaminoethylether, N-(3-dimethylaminopropyl)-N, N-diisopropanolamin, N-(3-Dimethylaminopropyl)-N,N-diisopropanolamin, 2-(2-Dimethylaminoethoxy)ethanol und N,N,N'-Trimethylaminoethylethanolamin.

Im Schritt (iv) liegt das molare Verhältnis von Isocyanat zu Isocyanatreaktiver Gruppen bevorzugt zwischen 0,4 und 1, bevorzugt zwischen 0,6 und 1. Isocyanat-reaktive Gruppen sind sämtliche Gruppen die in der Lage sind mit Isocyanatgruppen -NCO zu reagieren, insbesondere -OH, -NH₂ und -NHR. Bei der Berechnung des molaren Verhältnis sind sämtliche Isocyanat-reaktive Gruppen, die aus dem Reaktionsprodukt (I), der Verbindung (IV), der equilibrierten Verbindung (I), der equilibrierten Verbindung (IV) und/oder der Verbindung (VI) stammen, zu berücksichtigen.

Das erfindungsgemäße Verfahren kann ferner einen zusätzlichen Schritt (v) umfassen, in dem zumindest ein Teil der im Produkt aus Schritt (iv) enthaltenen tertiären Amine durch dem Fachmann bekannte Verfahren quaterniert wird. Geeignete Quaternierungsmittel sind z.B. Dimethylsulfat, Diethylsulfat, Methyltosylat, Methylchlorid, oder Benzylchlorid. Bevorzugt wird das Produkt in Gegenwart eines organischen Lösungsmittels, z.B. Butyldiglykol, bei Temperaturen zwischen 10-80 °C quaterniert. Alternativ können die in Schritt (i), (ii) oder (iii) bereitgestellten Verbindungen einzeln oder gemeinsam einer Quaternierungsreaktion unterzogen werden. Bevorzugt sind >30 %, stärker bevorzugt >50 % und noch stärker bevorzugt >60 % aller tertiären Amine im Endprodukt quaterniert.

Ein weiterer Aspekt der Erfindung ist eine wässrige Emulsion, umfassend ein erfindungsgemäßes Polysiloxan. In einer bevorzugten Ausführungsform enthält die wässrige Emulsion 1-80 Gew.-%, bevorzugt 1-60 Gew.-% und stärker bevorzugt 1-50 Gew.-% des erfindungsgemäßen Polysiloxans bezogen auf die Gesamtzusammensetzung. Die Komponenten der erfindungsgemäßen wässrigen Emulsion, umfassend Wasser und das erfindungsgemäße Polysiloxan, können durch dem Fachmann bekannte Mischverfahren bei Temperaturen von bevorzugt 10-80 °C erhalten werden. So können erfindungsgemäße wässrige Emulsionen beispielsweise unter Anwendung moderater bis hoher Scherkräfte, zum Beispiel mittels Rührer, Ultraturax, oder Homogenisator in Emulsion gebracht werden. Der Zusatz einer Säure, zum Beispiel Essigsäure oder Milchsäure, fördert dabei ggf. den Prozess der Emulgierung erheblich. Überraschenderweise hat sich gezeigt, dass die erfindungsgemäßen Polysiloxane selbstemulgierend sind, d.h. keine zusätzlichen Tenside notwendig sind, um Makro- oder Mikroemulsionen bereitzustellen.

Gemäß der vorliegenden Erfindung sind Makroemulsionen definiert durch eine mittlere Tröpfchengröße von ≥ 350 nm. Mikroemulsionen haben bevorzugt eine mittlere Tröpfchengröße von < 350 nm.

Die wässrige Emulsion der vorliegenden Erfindung kann ferner mindestens ein Tensid und/oder mindestens ein Lösungsmittel und/oder mindestens eine Säure enthalten.

Als organisches Lösungsmittel werden bevorzugt halogenierte und nichthalogenierte Kohlenwasserstoffe, Alkohole, Glycole, Ether, Ester, Ketone, Aromaten, zum Beispiel Benzol, Phenol oder Xylol, und Polyoxyalkylene, besonders bevorzugt sind Butyldiglycol, 1,2-Propylenglycol, Dipropylenglycolmonomethylether, Dipropylenglycolmonobutylether eingesetzt. Das Lösungsmittel ist bevorzugt in einem Anteil von 0 bis 25 Gew.-%, stärker bevorzugt von 0,25 bis 10 Gew.-% bezogen auf die Gesamtzubereitung enthalten. In einer bevorzugten Ausführungsform enthält die wässrige Emulsion kein zusätzliches Lösungsmittel.

Als geeignete Säuren können u.a. Essigsäure oder Milchsäure verwendet werden. Der Anteil an Säure beträgt bevorzugt von 0,1 bis 4 Gew.-%, stärker bevorzugt von 0,2 bis 2 Gew.-% bezogen auf die Gesamtzusammensetzung. Geeignete Tenside sind anionische, kationische, nicht-ionogene oder amphotere Emulgatoren oder Mischungen davon. Vorzugsweise werden Alkoxylierungsprodukte aliphatischer Alkohole mit 6-22 Kohlenstoffatomen verwendet, die bis zu 50 Mol Alkylenoxid-Einheiten, insbesondere Ethylenoxid- und/oder Propylenoxid-Einheiten, umfassen. Die Alkohole können bevorzugt 1-16 Kohlenstoffatome enthalten; sie können gesättigt, linear oder vorzugsweise verzweigt sein und können allein oder in Mischungen zur Anwendung gelangen. Besonders bevorzugte Tenside sind Ethoxylate des 2,6,8-Trimethyl-4-nonanols, Isodecylalkohols oder Isotridecylalkohols mit jeweils 2-50 Mol, insbesondere 3-15 Mol EthylenoxidEinheiten. Von besonderem Vorteil hinsichtlich niedriger Schaumentwicklung sind oben genannte Tenside, wenn die Alkylenoxid-Einheiten in statistischer Verteilung und vorzugsweise in blockartiger Verteilung vorliegen. Tensid ist bevorzugt in einem Anteil von 0,2 bis 10 Gew.-%, stärker bevorzugt von 0,5 bis 5 Gew.-% bezogen auf die Gesamtzubereitung in der wässrigen Emulsion enthalten. In einer anderen bevorzugten Ausführungsform enthält die wässrige Emulsion kein zusätzliches Tensid.

Der wässrigen Emulsion können ferner dem Fachmann bekannte Additive zugegeben werden, wie beispielsweise anorganische und/oder organische Partikel, Fettsäurekondensate, Polyalkylenwachse, fluorierte Polymere und/oder Silikone.

Ein weiterer Gegenstand der Erfindung ist die Verwendung der erfindungsgemäßen Polysiloxane bzw. der erfindungsgemäßen wässrigen Emulsion zur Ausrüstung von textilen Flächengebilden oder Textilfasern. Textile Flächengebilde oder Textilfasern, die mit den erfindungsgemäßen Polysiloxanen bzw. wässrigen Emulsionen ausgerüstet werden können, sind Gewebe, Gewirke und Garne aus nativen Fasern, wie beispielsweise Baumwolle oder Wolle, aber auch aus synthetischen Fasern, wie beispielsweise Viskose, Polyester, Polyamid, Polyolefine oder Polyacrylnitril. Die Polysiloxane bzw. wässrigen Emulsionen gemäß der vorliegenden Erfindung werden bevorzugt in Form von wässrigen Bädern und Anwendungsflotten, gegebenenfalls zusammen mit weiteren Präparationsmitteln auf die textilen Flächengebilde oder Textilfasern aufgebracht. Als zusätzliche Präparationsmittel kommen beispielsweise Chemikalien zur Knitterfrei-Ausrüstung in Betracht. Die Polysiloxane bzw. wässrigen Emulsionen gemäß der vorliegenden Erfindung werden bevorzugt durch Zwangsapplikation, beispielsweise durch Tränken des Substrats, anschließendes Abquetschen auf dem Foulard und einer abschließenden Trocknungspassage aufgebracht. Bevorzugt sind auch herkömmliche Ausziehverfahren, Sprühapplikation sowie Auftrag mittels Druck- oder Flatschverfahren. Bevorzugt weisen die textilen Flächengebilde oder Textilfasern etwa 0,1-5 Gew.-%, stärker bevorzugt 0,1-2 Gew.-% der erfindungsgemäßen Polysiloxane bezogen auf das Gewicht des Substrats auf.

Ein weiterer Aspekt der Erfindung ist somit auch ein Verfahren zur Ausrüstung von textilen Flächengebilden oder Fasern, umfassend das Aufbringen des erfindungsgemäßen Polysiloxans oder der erfindungsgemäßen wässrigen Emulsion auf das textile Flächengebilde oder die Faser.

Ein weiterer Aspekt der Erfindung ist ein textiles Flächengebilde oder Fasern, umfassend mindestens ein erfindungsgemäßes Polysiloxan.

In einer weiteren Ausführungsform kann das erfindungsgemäße Polysiloxan oder die erfindungsgemäße wässrige Emulsion zur Behandlung von Papier oder Leder verwendet werden. Hierzu wird das Polysiloxan oder die wässrige Emulsion durch dem Fachmann bekannte Techniken auf das Papier oder Leder aufgetragen. Die Beschichtung von Leder oder Papier erfolgt bevorzugt über Sprühapplikation, Druckverfahren, Druckimprägnieren oder Rakelverfahren. Bevorzugt werden auf Papier oder Leder etwa 0,1-5 Gew.-%, bevorzugt 0,1-2 Gew.-%, Polysiloxan bezogen auf das Gewicht des Substrats aufgetragen.

Durch die Ausrüstung oder Modifikation der Substrate mit den erfindungsgemäßen Polysiloxanen können gewünschte Eigenschaften, wie zum Beispiel ein weicher fließender Griff, verbesserte Elastizität, antistatische Eigenschaften, Farbvertiefung, Oberflächenglätte, Glanz, Knittererholung, Farbechtheit und/oder Hydrophilie, erreicht werden.

In einem weiteren Aspekt der Erfindung werden die erfindungsgemäßen Polysiloxane bzw. wässrigen Emulsionen für kosmetische Anwendungen, z.B. in Haarwaschmitteln, verwendet. Hierbei verleihen sie z.B. dem Haar einen weichen Griff und einen vorteilhaften Glanz. Bevorzugt wird das Polysiloxan in Mengen von 0,1 bis 10 Gew.-%, stärker bevorzugt von 0,1 bis 5 Gew.-%, bezogen auf die Gesamtzusammensetzung, eingesetzt.

In einem anderen Aspekt der Erfindung können die erfindungsgemäßen Polysiloxane bzw. die wässrigen Emulsionen in Lacken oder Lasuren eingesetzt werden. Bevorzugt wird das Polysiloxan in Mengen von 0,1 bis 5 Gew.-%, stärker bevorzugt von 0,1 bis 5 Gew.-% bezogen auf die Gesamtzusammensetzung eingesetzt. Durch den Einsatz der erfindungsgemäßen Polysiloxane kann die Oberflächenrauheit verringert werden und der Glanz erhöht werden.

Es hat sich gezeigt, dass die erfindungsgemäßen Polysiloxane den derart modifizierten Substraten, insbesondere den textilen Flächengebilden oder Textilfasern, einen sehr guten Weichgriff bei sehr guter Hydrophilie verleihen. Zusätzlich zeichnen sie sich durch eine geringe Vergilbungsneigung, sowie durch eine sehr gute Trockenhitzefixierechtheit aus. Des Weiteren besitzen die erfindungsgemäßen Polyurethan-Organopolysiloxane in ihren Zubereitungen eine geringe Neigung zur Schaumbildung und gegenüber den aus dem Stand der Technik bekannten Polysiloxanen eine deutlich verbesserte Anionen- und pH-Wert-Stabilität in der Anwendung.

### Beispiele

### Vergleichsbeispiel 1, nicht erfindungsgemäß

Die Zubereitung besteht aus einer wässrigen Mikroemulsion, enthaltend 20 Gew-% FINISH WR 301 der Firma WACKER, ein Aminoethylaminopropyl-funktionalisiertes Organopolysiloxan, 10 Gew.-% eines Isodecylalkoholes mit 7 Ethylenoxidgruppen und 0,4 Gew.-% 60 %-iger Essigsäure. Der Gesamtstickstoffgehalt des Organopolysiloxans beträgt 0,39 Gew.-%.

### Vergleichsbeispiel 2, nicht erfindungsgemäß

Die kommerziell verfügbare Zubereitung RUCOFIN SIQ besteht aus einer wässrigen Mikroemulsion eines mit quaternären Ammoniumfunktionen modifizierten Polysiloxans mit einer Trockensubstanz von 24,5 %.

### Vergleichsbeispiel 3, nicht erfindungsgemäß

Die Zubereitung wurde hergestellt wie beschrieben in WO 2004/044306, Tabelle 2, Mischung 12c. Die Trockensubstanz wurde mit Wasser auf 25 Gew.-% eingestellt.

### Vergleichsbeispiel 4, nicht erfindungsgemäß

516,6 g (0,1 mol) eines *α*,*ω*-Dihydrogenpolydimethylsiloxans mit 0,039 Gew.-% Si-gebundenem Wasserstoffs werden mit 149,8 g (0,2 mol) eines Allylalkoholpolyethers mit der kommerziellen Bezeichnung Pluriol A 750 R der Firma BASF SE analog EP 1753804 Bsp. 1 umgesetzt zu einem Polyether-modifizierten Polydimethylsiloxan der Formel

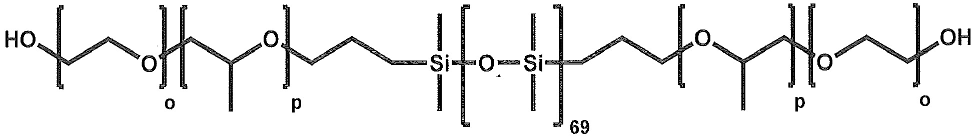

Von dem erhaltenen Organopolysiloxan werden 120 g (0,036 mol OH) mit 2,4 g (0,040 mol OH) N-Methyldiethanolamin und 0,7 g (0,007 mol NH) N-Methylpiperazin vermengt und auf 45 °C erwärmt. Zu der Mischung werden 50 mg Di-n-butylzinndilaurat sowie 9,2 g (0,083 mol NCO) Isophorondiisocyanat zugegeben. Nach einem Temperaturanstieg von ca. 5 °C wird noch 1 h bei 50 °C gerührt. Mittels NCO-Titration wird die Vollständigkeit der Reaktion überprüft. Man erhält ein klares, hochviskoses, gelbes Öl.

25 g des erhaltenen Öls werden mit 1 g 60%iger Essigsäure vermengt und unter Rühren auf 50 °C erwärmt. Unter Rühren werden portionsweise bei 50 °C 74 g Wasser zugegeben. Man erhält eine weiße Emulsion mit einer mittleren Teilchengröße von 250 nm.

### Beispiel 5, erfindungsgemäß

Die Herstellung des Polyether-funktionellen Organopolisiloxans erfolgt durch Umsetzung von 539,2 g (0,1 mol) *α*,*ω-*Diepoxypolydimethylsiloxan mit der Formel 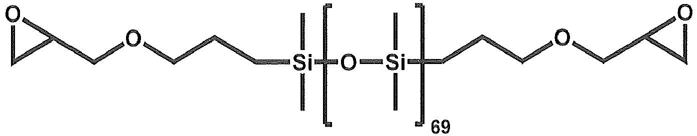 mit 150 g (0,2 mol) eines einfach Methyl-verschlossenen Polyethylenglycols mit einer mittleren Molekularmasse von 750 g/mol analog US 6495727 B1 Beispiel 1.

Von dem erhaltenen Organopolysiloxan werden 30 g (0,009 mol OH) mit 84 g (0,025 mol OH) der in Vergleichsbeispiel 4 erhaltenen Organopolysiloxan-Vorstufe vermischt. Zu der Mischung werden 2,4 g (0,040 mol OH) N-Methyldiethanolamin und 1,2 g (0,013 mol OH) N,N-Dimethylethanolamin gegeben und auf 45 °C erwärmt. Zu der Mischung werden 50 mg Di-n-butylzinndilaurat sowie 9,7 g Isophorondiisocyanat (0,088 mol NCO) zugegeben. Nach Temperaturanstieg auf ca. 5 °C wird noch 1 h bei 45 °C gerührt. Mittels NCO-Titration wird die Vollständigkeit der Reaktion überprüft. Man erhält ein klares, hochviskoses, gelbes Öl.

Die Emulgierung erfolgt analog Vergleichsbeispiel 4. Man erhält eine weißliche, transparente Emulsion mit einer mittleren Teilchengröße von 150 nm.

### Beispiel 6, erfindungsgemäß

Die Herstellung des Aminopolyether-funktionellen Organopolysiloxans erfolgt durch Umsetzung von 539,2 g (0,1 mol) *α*,*ω*-Diepoxypolydimethylsiloxan mit der Formel 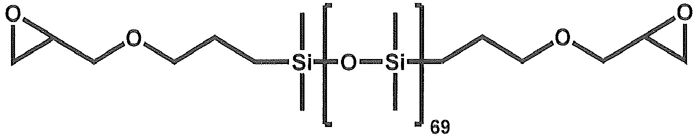 mit 120 g (0,2 mol) eines Amino-funktionellen, methylverschlossenen Polyethers mit dem kommerziellen Handelsnamen Jeffamine M 600 mit einer mittleren Molekularmasse von ca. 600 g/mol.

Von dem erhaltenen Organopolysiloxan werden 36 g (0,011 mol NH, 0,011 mol OH) mit 84 g (0,025 mol OH) der in Vergleichsbeispiel 4 erhaltenen Organopolysiloxan-Vorstufe vermischt. Zu der Mischung werden 2,2 g (0,036 mol OH) N-Methyldiethanolamin und 1,2 g (0,013 mol OH) N,N-Dimethylethanolamin vermengt und auf 45 °C erwärmt. Zu der Mischung werden 50 mg Di-n-butylzinndilaurat sowie 9,5 g (0,086 mol NCO) Isophorondiisocyanat zugegeben. Nach Anstieg der Temperatur um ca. 5 °C wird noch 1 h bei 45 °C gerührt. Mittels NCO-Titration wird die Vollständigkeit der Reaktion überprüft. Man erhält ein klares, hochviskoses, gelbes Öl.

Die Emulgierung erfolgt analog Vergleichsbeispiel 4. Man erhält eine weißliche, transparente Emulsion mit einer mittleren Teilchengröße von 150 nm.

### Beispiel 7, erfindungsgemäß

Von der in Beispiel 5 erhaltenen Organopolysiloxan-Vorstufe werden 36 g (0,010 mol OH) mit 84 g (0,025 mol OH) der in Vergleichsbeispiel 4 erhaltenen Verbindung vermischt. Zu der Mischung werden 2,4 g (0,040 mol OH) N-Methyldiethanolamin und 0,7 g (0,007 mol NH) N-Methylpiperazin vermengt und auf 45 °C erwärmt. Zu der Mischung werden 50 mg Di-n-butylzinndilaurat sowie 9,2 g (0,083 mol NCO) Isophorondiisocyanat zugegeben. Nach Anstieg der Temperatur um ca. 5 °C wird noch 1 h bei 45 °C gerührt. Mittels NCO-Titration wird die Vollständigkeit der Reaktion überprüft. Man erhält ein klares, hochviskoses, gelbes Öl.

Die Emulgierung erfolgt analog Vergleichsbeispiel 4. Man erhält eine weißliche, transparente Emulsion mit einer mittleren Teilchengröße von 140 nm.

### Beispiel 8, erfindungsgemäß

Von der in Beispiel 5 erhaltenen Organopolysiloxan-Vorstufe werden 120 g (0,036 mol OH) mit 2,4 g (0,040 mol OH) N-Methyldiethanolamin und 0,7 g (0,007 mol NH) N-Methylpiperazin vermengt und auf 45 °C erwärmt. Zu der Mischung werden 50 mg Di-n-butylzinndilaurat sowie 9,3 g (0,083 mol NCO) Isophorondiisocyanat zugegeben. Nach Anstieg der Temperatur um ca. 5 °C wird noch 1 h bei 45 °C gerührt. Mittels NCO-Titration wird die Vollständigkeit der Reaktion überprüft. Man erhält ein klares, hochviskoses, gelbes Öl.

Die Emulgierung erfolgt gemäß Vergleichsbeispiel 4. Man erhält eine weißliche, transparente Emulsion mit einer mittleren Teilchengröße von 120 nm.

Gewichtszusammensetzung der hergestellten Organopolysiloxane:

| Beispiel | PDMS-Gehalt [Gew.-%] | Gehalt Polyether gesamt [Gew.-%] | Gehalt lateraler Polyether [Gew.-%] | Titrierbarer Basischer Stickstoff [Gew.-%] |
|---|---|---|---|---|
| Vgl.Bsp. 4 | 72,9 | 20,4 | 0 | 0,35 |
| 5 | 71,4 | 20,0 | 5,1 | 0,36 |
| 6 | 72,0 | 19,2 | 4,9 | 0,33 |
| 7 | 72,4 | 20,2 | 5,9 | 0,34 |
| 8 | 71,0 | 19,7 | 19,7 | 0,35 |

### Griffbeurteilung

Abschnitte einer gebleichten, optisch nicht aufgehellten Baumwoll-Frotteeware wurden mit einer wässrigen Flotte mit 20 g/l der jeweiligen Zubereitung gemäß Beispiel 1-8 und 0,5 g/l Essigsäure (60%) auf einem Laborfoulard mit einer Nassaufnahme von 80 % ausgerüstet und anschließend 2 min bei 120°C getrocknet. Nach der Behandlung wird das mit der Emulsion behandelte Testgewebe 2 h im Normalklima wie in ISO 139 beschrieben bei 65 % relativer Luftfeuchte und einer Temperatur von 20°C konditioniert. Anschließend erfolgte die Beurteilung des Griffcharakters der Testgewebe. Diese unterliegt individuell unterschiedlichen, subjektiven Kriterien. Um trotzdem zu aussagekräftigen Ergebnissen zu kommen, ist eine Beurteilung durch mindestens 5 Testpersonen erforderlich. Die Auswertung der Ergebnisse erfolgte nach statistischen Methoden, wobei die Notenstufe 1,0 den weichsten, angenehmsten Griff, die Notenstufe 5 den härtesten, wenigsten oberflächenglatten und unangenehmsten Griff innerhalb der Testreihe darstellt.

### Griffbewertung

### innerhalb der Testreihe

| | |
|---|---|
| Vergleichsbeispiel 1 | 1,1 |
| Vergleichsbeispiel 2 | 1,3 |
| Vergleichsbeispiel 3 | 2,3 |
| Vergleichsbeispiel 4 | 2,1 |
| Beispiel 5 | 1,4 |
| Beispiel 6 | 1,0 |
| Beispiel 7 | 1,3 |
| Beispiel 8 | 1,2 |
| Unbehandelt | 5 |

Die erfindungsgemäßen Zubereitungen 5-8 verleihen den damit ausgerüsteten Textilien einen ausgezeichneten Weichgriff.

### Vergilbung

Abschnitte einer gebleichten, nicht optisch aufgehellten Baumwoll-Modal-Maschenware wurden mit einer wässrigen Flotte mit 20 g/l der jeweiligen Zubereitungen gemäß Beispiel 1-10 und 0,5 g/l Essigsäure 60 % auf einem Laborfoulard mit einer Nassaufnahme von 80 % imprägniert, 2 min bei 120°C getrocknet und anschließend 2min bei 170°C thermofixiert. Anschließend wurde der Weißgrad der Muster nach Ganz auf dem Weißgradmeßgerät "datacolor 600" der Firma "datacolor international" (Schweiz) gemessen.

### Weißgrad nach Ganz

| | |
|---|---|
| Vergleichsbeispiel 1 | 183 |
| Vergleichsbeispiel 2 | 205 |
| Vergleichsbeispiel 3 | 199 |
| Vergleichsbeispiel 4 | 201 |
| Beispiel 5 | 203 |
| Beispiel 6 | 200 |
| Beispiel 7 | 202 |
| Beispiel 8 | 204 |
| Unbehandelt | 203 |

Die erfindungsgemäßen Zubereitungen führen zu keiner Vergilbung des Textilsubstrats. Der Weißgrad der mit den erfindungsgemäßen Zubereitungen ausgerüsteten Substrate entspricht dem des unbehandelten Textils.

### Alkalistabilität

Die Stabilität der Emulsionen gegen Alkalien in Ausrüstungsflotten wurde gemäß dem nachfolgend beschriebenen Test durchgeführt:
500 ml einer wässrigen Lösung der zu untersuchenden Emulsion mit einer Konzentration von 40 g/l wurden in einem 1000 ml Becherglas vorgelegt und mit Natriumhydroxidlösung (w(NaOH) = 10%) auf einen pH-Wert von 11 eingestellt. Anschließend wurde die Flotte 20 min mit einem Flügelrührer bei 2000 Umdrehungen pro Minute gerührt. Anschließend wurde der Rührer abgestellt, und die Flüssigkeitsoberfläche nach 1h hinsichtlich Abscheidungen beurteilt.

| | Beurteilung nach 1 Stunde |
|---|---|
| Vergleichsbeispiel 1 | starke Abscheidungen |
| Vergleichsbeispiel 2 | keine Abscheidungen |
| Vergleichsbeispiel 3 | leichte Abscheidungen |
| Vergleichsbeispiel 4 | leichte Abscheidungen |
| Beispiel 5 | keine Abscheidungen |
| Beispiel 6 | keine Abscheidungen |
| Beispiel 7 | keine Abscheidungen |
| Beispiel 8 | keine Abscheidungen |

Die erfindungsgemäßen Zubereitungen zeigen bei pH-Werten von 11 keine Abscheidungstendenzen. Solche Zubereitungen können als pH-Wert stabil eingestuft werden.

### Anionenstabilität

Die Stabilität der Emulsionen gegen Anionen in Ausrüstungsflotten wurde gemäß dem nachfolgend beschriebenen Test durchgeführt:
500 ml einer wässrigen Lösung, beinhaltend 10 g der zu untersuchenden Emulsion und 20 ml einer 0,5 %-igen Dodecylbenzolsulfonsäurelösung wurden in einem 1000 ml Becherglas vorgelegt und mit 60%iger Essigsäure auf einen pH-Wert von 4,5 eingestellt. Anschließend wurde die Flotte auf 40 °C erwärmt und bei dieser Temperatur 30 min mit einem Flügelrührer bei 2000 Umdrehungen pro Minute gerührt. Anschließend wurde der Rührer abgestellt und die Lösung nach 2 h Ruhen hinsichtlich ihrer Trübung, sowie die Flüssigkeitsoberfläche auf Abscheidungen hin untersucht.

| | Aussehen der Flotte nach 2 Stunden | Beurteilung nach 2 Stunden |
|---|---|---|
| Vergleichsbeispiel 1 | trüb | starke Abscheidungen |
| Vergleichsbeispiel 2 | trüb | starke Abscheidungen |
| Vergleichsbeispiel 3 | leicht trüb | leichte Abscheidungen |
| Vergleichsbeispiel 4 | leicht trüb | leichte Abscheidungen |
| Beispiel 5 | klar | keine Abscheidungen |
| Beispiel 6 | klar | keine Abscheidungen |
| Beispiel 7 | klar | keine Abscheidungen |
| Beispiel 8 | klar | keine Abscheidungen |

### Hydrophilie

Die Warenhydrophilie nach der Ausrüstung wurde nach dem TEGEWA Tropfentest (Melliand Textilberichte 68 (1987), 581-583) durchgeführt. Das ausgerüstete Gewebe wird zur Durchführung des Tests auf einer geeigneten Spannvorrichtung horizontal aufgespannt, so dass es mit der Unterlage nicht in Kontakt kommt. Aus einer Höhe von 40 mm wird ein Wassertropfen von 0,050 ml (+/- 10 %) auf das Gewebe getropft. Sobald der Tropfen auf das zu prüfende Gewebe trifft, wird die Zeitmessung gestartet. Die Zeitmessung wird gestoppt, wenn der Tropfen vollständig in das Gewebe eingesunken und der Glanz verschwunden ist.

| | Einsatzmenge in g/l | Einsinkzeit in Sekunden |
|---|---|---|
| Vergleichsbeispiel 1 | 20 | > 120 |
| Vergleichsbeispiel 2 | 20 | < 1 |
| Vergleichsbeispiel 3 | 20 | 4 |
| Vergleichsbeispiel 4 | 20 | 5 |
| Beispiel 5 | 20 | 1 |
| Beispiel 6 | 20 | 2 |
| Beispiel 7 | 20 | 1 |
| Beispiel 8 | 20 | < 1 |
| Unbehandelt | 0 | < 1 |

### Schaumverhalten

Für die Bewertung des Schaumverhaltens wird 1 I einer Flotte mit 3 g/l der gemäß den Beispielen hergestellten Zubereitungen angesetzt. Diese wird in einem Laborjet der Firma MATHIS gefüllt und bei 40 °C und 1000 rpm umgewälzt. Nach 10 min wird die Schaumhöhe gemessen. Die maximale Schaumhöhe beträgt 10 cm, die minimale 0 cm. Eine geringe Schaumhöhe ist als positiv zu bewerten.

| | Schaumhöhe in cm |
|---|---|
| Vergleichsbeispiel 1 | 9 |
| Vergleichsbeispiel 2 | 8 |
| Vergleichsbeispiel 3 | 5 |
| Vergleichsbeispiel 4 | 6 |
| Beispiel 5 | 3 |
| Beispiel 6 | 2 |
| Beispiel 7 | 3 |
| Beispiel 8 | 1 |

### Trocken hitzefixierechtheit

Die Prüfung der ausgerüsteten Flächentextilware auf Farbechtheit erfolgt gemäß EN ISO 105-P01. Aus dem zu untersuchenden gefärbten und ausgerüsteten Textil wird eine Probe von den Abmessungen der Heizeinrichtung entnommen und zwischen die beiden Einzelfaser-Begleitgewebe mit den gleichen Abmessungen gelegt und an einer Schmalseite zum Prüfling vernäht. Der Prüfling wird in die Heizeinrichtung eingebracht und 30 s bei 150, 180 oder 210 °C behandelt. Der Flächendruck auf den Prüfling beträgt 4 kPa. Nach der Behandlung wird der Prüfling 4 h im Normalklima wie in ISO 139 beschrieben bei 65 % relativer Luftfeuchte und einer Temperatur von 20 °C ausgelegt. Die Änderung der Farbe wird mit dem Graumaßstab (ISO 105 A02) bewertet. Die Bewertung der Begleitgewebe erfolgt durch den Vergleich zwischen den angebluteten Begleitgeweben und den im Blindversuch behandelten Begleitgeweben mit dem Graumaßstab (ISO 105 A03) zur Bewertung des Anblutens. Die besten Ergebnisse erhalten hierbei die Note 5, die schlechtesten Ergebnisse die Note 1.

Bewertung des Prüflings und des Begleitgewebes:

| | Prüfling | | | Begleitgewebe | | |
|---|---|---|---|---|---|---|
| | 150 °C | 180 °C | 210 °C | 150 °C | 180 °C | 210 °C |
| Vergleichsbeispiel 1 | 2-3 | 2 | 1 | 2-3 | 2 | 1 |
| Vergleichsbeispiel 2 | 2-3 | 1 | 1 | 2 | 1 | 1 |
| Vergleichsbeispiel 3 | 3-4 | 3 | 2 | 4 | 3-4 | 2 |
| Vergleichsbeispiel 4 | 4 | 3 | 2 | 4-5 | 3-4 | 2-3 |
| Beispiel 5 | 4-5 | 3-4 | 2-3 | 4 | 3-4 | 3 |
| Beispiel 6 | 5 | 4 | 3 | 4-5 | 4 | 3 |
| Beispiel 7 | 4-5 | 3-4 | 2-3 | 4-5 | 4 | 3 |
| Beispiel 8 | 4-5 | 4 | 3-4 | 4-5 | 3-4 | 2-3 |
| Unbehandelt | 5 | 4-5 | 4 | 4-5 | 4 | 3 |

Die mit den erfindungsgemäßen Zubereitungen 5-8 ausgerüsteten Prüflinge weisen eine deutlich reduzierte Farbveränderung und eine geringere Neigung zum Anbluten, insbesondere im Vergleich zu den Prüflingen, welche mit Zubereitungen 1 und 2, die als Additive Emulgatoren enthalten, ausgerüstet wurden.

## Patentansprüche

1. Polysiloxan, erhältlich durch ein Verfahren, umfassend die Schritte:
(i) Bereitstellen mindestens eines Reaktionsprodukts (I) aus einer Verbindung (II) mit der Formel 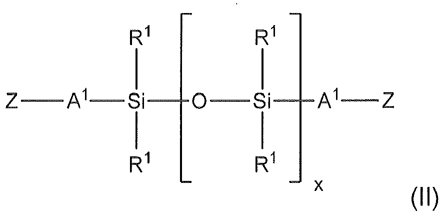 wobei
R¹ gleich oder verschieden sein kann und einen gegebenenfalls substituierten Kohlenwasserstoffrest mit 1-18 Kohlenstoffatomen je Rest bedeutet,
A¹ unabhängig voneinander eine zweiwertige lineare oder verzweigte Gruppe mit bis zu 8 Kohlenstoffatomen und gegebenenfalls mit bis zu 4 Heteroatomen bedeutet,
x eine ganze Zahl von 1-1000, bevorzugt 1-500 ist, und
Z 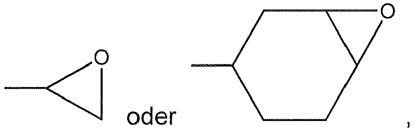 ggf. substituiert mit C₁₋₈-Alkyl, ist
mit mindestens einer Verbindung (III), ausgewählt aus primärem Amin, sekundärem Amin und Monoalkohol, die ggf. mindestens einen Polyetherrest enthält,
wobei mindestens ein Reaktionsprodukt (I) mindestens einen Polyetherrest enthält, der durch Verbindung (III) eingeführt wurde;
(ii) gegebenenfalls Bereitstellen mindestens einer Verbindung (IV) mit der Formel 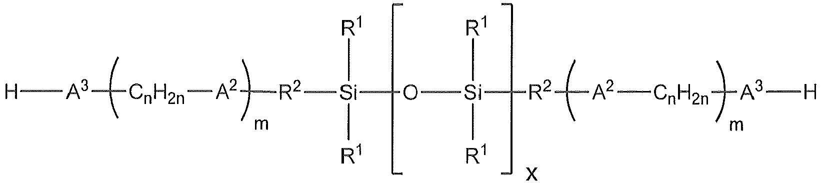 wobei
R¹ und x wie oben definiert sind,
R² unabhängig voneinander zweiwertiges verzweigtes oder lineares C₂₋₈-Alkyl, gegebenenfalls substituiert mit Carbonyl, ist,
A² unabhängig voneinander ausgewählt ist aus der Gruppe aus -O-, -C(O)-O-, -O-C(O)-, -O-C(O)-O-, -C(O)-NH-, -NH-C(O)-, -NH-C(O)-O- und -NH-C(O)-NH-,
A³ unabhängig voneinander ausgewählt ist aus der Gruppe aus -O-, -NH- und -NR'-,
R' ein einwertiger Kohlenwasserstoffrest mit 1 bis 18 Kohlenstoffatomen ist,
n unabhängig voneinander eine ganze Zahl von 1 bis 20, bevorzugt 2 oder 3 ist und
m unabhängig voneinander eine ganze Zahl von 0-150, bevorzugt 0-70, stärker bevorzugt 0-30, ist;
(iii) ggf. Equilibrieren mindestens eines Reaktionsprodukts (I) und/oder mindestens einer Verbindung (IV) mit einem zyklischen oder linearen Polysiloxan, und
(iv) Umsetzen des Reaktionsprodukts (I) oder des equilibrierten Reaktionsprodukts (I) aus Schritt (iii) und gegebenenfalls der Verbindung (IV) oder der equilibrierten Verbindung (IV) aus Schritt (iii) mit mindestens einer organischen Verbindung (V), die pro Molekül mindestens zwei Isocyanatgruppen aufweist.

2. Polysiloxan nach Anspruch 1, wobei R¹ ausgewählt ist aus der Gruppe aus C₁₋₆-Alkyl, Aryl oder Benzyl, bevorzugt C₁₋₆-Alkyl, stärker bevorzugt Methyl oder Ethyl.

3. Polysiloxan nach einem der vorhergehenden Ansprüche, wobei A¹ C₁₋₈-Alkyl oder -C₁₋₆-Alkyl-O-C₁₋₆-Alkyl-, bevorzugt -CH₂-CH₂-CH₂-O-CH₂-, ist.

4. Polysiloxan nach einem der vorhergehenden Ansprüche, wobei die Verbindung (III) ausgewählt ist aus 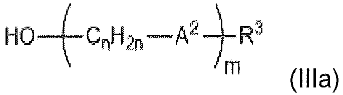 und 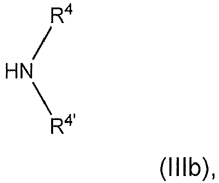 wobei
A², m und n wie oben definiert sind,
R³ C₁₋₂₂-Alkyl, C₂-C₂₂-Alkenyl, C₂-C₂₂-Alkinyl, Aryl, gegebenenfalls substituiert mit mindestens einem Styryl, oder C₆-C₂₂-Alkaryl ist,
R⁴ H, C₁₋₈-Alkyl, Heterocyclyl, Aryl oder -(CₙH₂ₙ-A²)ₘ-R³ ist, und
R^{4'} C₁₋₈-Alkyl, Heterocyclyl, Aryl oder -(CₙH₂ₙ-A²)ₘ-R³ ist.

5. Polysiloxan nach einem der vorhergehenden Ansprüche, wobei das Polysiloxan zur Equilibrierung im Schritt (iii) Polydi-C₁₋₆-alkyl-siloxan, bevorzugt Polydimethylsiloxan, stärker bevorzugt Oligodimethylsiloxan, noch stärker bevorzugt zyklisches Oligo- oder Polydimethylsiloxan, ist.

6. Polysiloxan nach einem der vorhergehenden Ansprüche, wobei die Verbindung (V) ausgewählt ist aus Hexamethylen-1,6-diisocyanat, Isophorondiisocyanat, Toluylen-2,4-diisocyanat, Toluylen-2,6-diisocyanat, Phenylen-1,3-diisocyanat, 4,4'-Methylen-bis-(cyclohexylisocyanat), 4,4'-Methylen-bis(phenylisocyanat) und Dimethylphenyldiisocyanat.

7. Polysiloxan nach einem der vorhergehenden Ansprüche, wobei im Schritt (iv) ferner mindestens eine Verbindung (VI) umfassend mindestens eine Isocyanat-reaktive Gruppe zugegen ist, die bevorzugt ausgewählt ist aus
R⁴-(A²-CₙH₂ₙ)ₘ-A³-H,
HO-R⁵-NR⁶-R⁵-OH,
HO-R⁵-NR⁶R^{6'},
HO-R⁵(NR⁶R^{6'})₂,
HO-R⁵(NR⁶R^{6'})₃,
(HO)₂R⁵-NR⁶R^{6'},
HNR⁶R^{6'},
H₂N-R⁵-NR⁶R^{6'},
R^{6'}R⁶N-R⁵-NR⁶-R⁵-NR⁶R^{6'} und
R⁶R⁶N-R⁵-NR⁶-R^{6'},
wobei
R⁴, A², A³, n und m wie oben definiert sind,
R⁵ unabhängig voneinander gegebenenfalls substituiertes zweiwertiges, dreiwertiges oder vierwertiges C₁₋₈-Alkyl, C₁₋₈-Alkyl-O-C₁₋₈-Alkyl oder Aryl ist,
R⁶ H, gegebenenfalls substituiertes C₁₋₁₈-Alkyl oder Aryl ist, und
R^{6'} ggf. substituiertes C₁₋₁₈-Alkyl oder Aryl ist, oder
R⁶ und R^{6'} mit dem Stickstoffatom einen Heterozyklus bilden, der gegebenenfalls weitere Heteroatome enthalten kann und gegebenenfalls substituiert ist mit C₁₋₈-Alkyl.

8. Polysiloxan nach einem der vorhergehenden Ansprüche, wobei im Schritt (iv) das molare Verhältnis von Isocyanatgruppen zu isocyanatreaktiven Gruppen zwischen 0,4 und 1, bevorzugt zwischen 0,6 und 1, liegt.

9. Wässrige Emulsion, umfassend ein Polysiloxan gemäß einem der Ansprüche 1-13, gegebenenfalls ferner umfassend mindestens ein Tensid und/oder ein Lösungsmittel und/oder eine Säure.

10. Verwendung eines Polysiloxans nach einem der Ansprüche 1-8 oder einer Emulsion nach Anspruch 9 zur Ausrüstung von textilen Flächengebilden oder Textilfasern, zur Behandlung von Papier oder Leder, für kosmetische Anwendungen oder in Lacken oder Lasuren.

11. Textiles Flächengebilde oder Fasern, umfassend ein Polysiloxan gemäß einem der Ansprüche 1-8.

12. Verfahren zur Ausrüstung von textilen Flächengebilden oder Fasern, umfassend Aufbringen des Polysiloxans gemäß einem der Ansprüche 1-8 oder der Emulsion gemäß Anspruch 9 auf das textile Flächengebilde oder die Faser.

## Claims

1. Polysiloxane obtainable by a method comprising the following steps:
(i) providing at least one reaction product (I) of a compound (II) having the formula 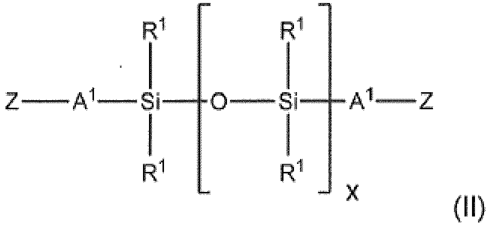 wherein
R¹ may be identical or different and denotes an optionally substituted hydrocarbon radical with 1-18 carbon atoms per radical,
A¹ denotes independently of one another a divalent linear or branched group with up to 8 carbon atoms and optionally with up to 4 hetero atoms,
x is an integer from 1-1000, preferably 1-500, and
Z is 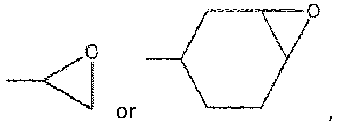 optionally substituted by C₁₋₈-alkyl,
with at least one compound (III) selected from primary amine, secondary amine and monohydric alcohol, which optionally contains at least one polyether radical,
wherein at least one reaction product (I) contains at least one polyether radical that was introduced by the compound (III);
(ii) optionally providing at least one compound (IV) of the formula 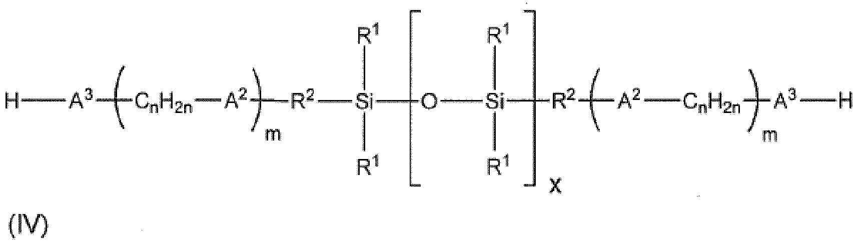 wherein
R¹ and x are as defined above,
R² is independently of one another a divalent branched or linear C₂₋₈-alkyl, optionally substituted with carbonyl,
A² independently of one another is selected from the group consisting of - O-, -C(O)-O-, -O-C(O)-,-O-C(O)-O-, -C(O)-NH-, -NH-C(O)-, -NH-C(O)-O- and -NH-C(O)-NH-
A³ independently of one another is selected from the group consisting of - O-, -NH- and -NR'-,
R' is a monovalent hydrocarbon radical with 1 to 18 carbon atoms,
n independently of one another is an integer from 1 to 20, preferably 2 or 3, and
m independently of one another is an integer from 0 to 150, preferably 0 to 70, more preferably 0 to 30;
(iii) optionally equilibrating at least one reaction product (I) and/or at least one compound (IV) with a cyclic or linear polysiloxane, and
(iv) reacting the reaction product (I) or the equilibrated reaction product (I) from step (iii) and optionally the compound (IV) or the equilibrated compound (IV) from step (iii) with at least one organic compound (V) that has at least two isocyanate groups per molecule.

2. Polysiloxane according to Claim 1, wherein R¹ is selected from the group consisting of C₁₋₆-alkyl, aryl or benzyl, preferably C₁₋₆-alkyl, more preferably methyl or ethyl.

3. Polysiloxane according to any one of the preceding claims, wherein A¹ is C₁₋₈-alkyl or -C₁₋₆-alkyl-O-C₁₋₆-alkyl, preferably -CH₂-CH₂-CH₂-O-CH₂-.

4. Polysiloxane according to any one of the preceding claims, wherein the compound (III) is selected from 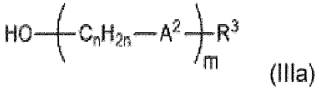 and 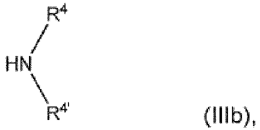 wherein
A², m and n are as defined above,
R³ is C₁₋₂₂-alkyl, C₂-C₂₂-alkenyl, C₂-C₂₂-alkynyl, aryl, optionally substituted with at least one styryl, or C₆-C₂₂-alkaryl,
R⁴ is H, C₁₋₈-akyl, heterocyclyl, aryl or -(CₙH₂ₙ-A²)ₘ-R³, and
R^{4'} is C₁₋₈-akyl, heterocyclyl, aryl or -(CₙH₂ₙ-A²)ₘ-R³.

5. Polysiloxane according to any one of the preceding claims, wherein the polysiloxane for the equilibration in step (iii) is polydi-C₁₋₆-alkylsiloxane, preferably polydimethylsiloxane, more preferably oligodimethylsiloxane, still more preferably cyclic oligo- or polydimethylsiloxane.

6. Polysiloxane according to any one of the preceding claims, wherein the compound (V) is selected from hexamethylene-1,6-diisocyanate, isophorone diisocyanate, toluylene-2,4-diisocyanate, toluylene-2,6-diisocyanate, phenylene-1,3-diisocynate, 4,4'-methylene-bis(cyclohexyl isocyanate), 4,4'-methylene-bis(phenyl isocyanate) and dimethylphenyl diisocyanate.

7. Polysiloxane according to any one of the preceding claims, wherein in step (iv) furthermore at least one compound (VI) comprising at least one isocyanate-reactive group is present, which is preferably selected from
R⁴-(A²-CnH₂ₙ)ₘ-A³-H,
HO-R⁵-NR⁶-R⁵-OH
HO-R⁵-NR⁶R^{6'},
HO-R⁵(NR⁶R^{6'})₂,
HO-R⁵(NR⁶R^{6'})₃,
(HO)₂R⁵-NR⁶R^{6'},
HNR⁶R⁶',
H₂N-R⁶-NR⁶R^{6'},
R^{6'}R⁶N-R⁵-NR⁶-R⁵-NR⁶R^{6'}, and
R^{6'}R⁶N-R⁵-NR⁶R^{6'},
wherein
R⁴, A², A³, n and m are as defined above,
R⁵ independently of one another is optionally substituted divalent, trivalent or tetravalent C₁₋₈-alkyl, C₁₋₈-alkyl-O-C₁₋₈-alkyl or aryl,
R⁶ is H optionally substituted C₁₋₁₈-alkyl or aryl, and
R^{6'} is optionally substituted C₁₋₁₈-alkyl or aryl, or
R⁶ and R^{6'} together with the nitrogen atom form a heterocycle, which can optionally contain further hetero atoms and is optionally substituted with C₁₋₈-alkyl.

8. Polysiloxane according to any one of the preceding claims, wherein in step (iv) the molar ratio of isocyanate groups to isocyanate-reactive groups is between 0.4 and 1, preferably between 0.6 and 1.

9. Aqueous emulsion comprising a polysiloxane according to any one of Claims 1 to 13, optionally further comprising at least one surfactant and/or a solvent and/or an acid.

10. Use of a polysiloxane according to any one of Claims 1 to 8 or an emulsion according to Claim 9 for finishing textile fabrics or textile fibres, for treating paper or leather, for cosmetic applications or in lacquers or in varnishes.

11. Textile fabrics or fibres, comprising a polysiloxane according to any one of Claims 1 to 8.

12. Method for finishing textile fabrics or fibres, comprising applying the polysiloxane according to any one of Claims 1 to 8 or the emulsion according to Claim 9 to the textile fabric or the fibres.

## Revendications

1. Polysiloxane pouvant être obtenu par un procédé comprenant les étapes suivantes :
(i) fournir au moins un produit de réaction (I) d'un composé (II) avec la formule 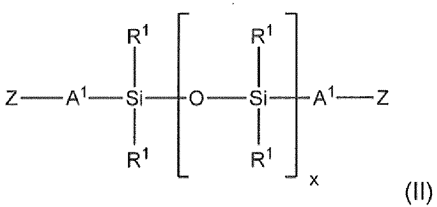 où
R¹ peut être identique ou différent et représente un radical hydrocarboné éventuellement substitué ayant de 1 à 18 atomes de carbone par radical,
A¹ représente indépendamment un groupe divalent linéaire ou ramifié ayant jusqu'à 8 atomes de carbone et comprenant éventuellement jusqu'à 4 hétéroatomes,
x est un nombre entier de 1-1000, de préférence de 1-500, et
Z est 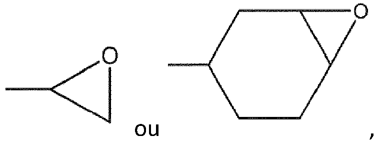 éventuellement substitué par un alkyle en C₁₋₈
avec au moins un composé (III) choisi parmi l'amine primaire, l'amine secondaire et le mono-alcool, comprenant éventuellement au moins un radical polyéther,
dans lequel au moins un produit de réaction (I) comprend au moins un radical polyéther introduit par le composé (III) ;
(ii) éventuellement, fournir au moins un composé (IV) avec la formule 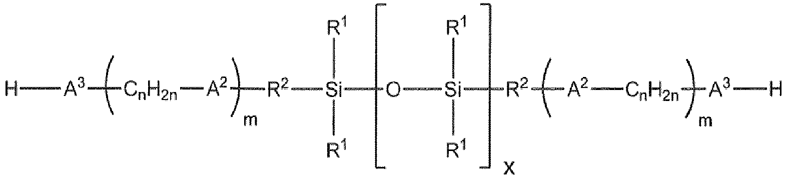 dans laquelle
R¹ et x sont tels que définis ci-dessus,
R² est indépendamment un alkyle divalent ramifié ou linéaire en C₂₋₈, éventuellement substitué par un carbonyle,
A² est choisi indépendamment dans le groupe constitué par -O-, -C(O)-O-, -O-C(O)-, -O-C(O)-O-, -C(O)-NH-, -NH-C(O)-, -NH-C(O)-O- et -NH-C(O)-NH-,
A³ est choisi indépendamment dans le groupe constitué par -O-, -NH- et -NR'-,
R' est un radical hydrocarboné monovalent ayant de 1 à 18 atomes de carbone,
n est indépendamment un nombre entier de 1 à 20, de préférence 2 ou 3, et
m est indépendamment un nombre entier de 0-150, de préférence 0-70, de manière plus préférée 0-30 ;
(iii) éventuellement, équilibrer au moins un produit de réaction (I) et/ou au moins un composé (IV) avec un polysiloxane cyclique ou linéaire, et
(iv) faire réagir le produit de réaction (I) ou le produit de réaction équilibré (I) de l'étape (iii) et éventuellement le composé (IV) ou le composé équilibré (IV) de l'étape (iii) avec au moins un composé organique (V) comportant au moins deux groupes isocyanate par molécule.

2. Polysiloxane selon la revendication 1, dans lequel R¹ est choisi dans le groupe constitué par alkyle en C₁₋₆, aryle ou benzyle, de préférence alkyle en C₁₋₆, de manière plus préférée méthyle ou éthyle.

3. Polysiloxane selon l'une quelconque des revendications précédentes, dans lequel A¹ est alkyle en C₁₋₈ ou C₁₋₆-alkyle-O-C₁₋₆-alkyle-, de préférence -CH₂-CH₂-CH₂-O-CH₂-.

4. Polysiloxane selon l'une quelconque des revendications précédentes, dans lequel le composé (III) est choisi parmi 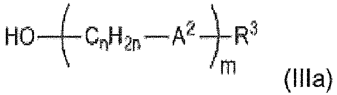 et 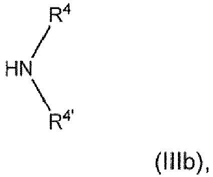 où
A², m et n sont tels que définis ci-dessus,
R³ est un alkyle en C₁₋₂₂, un alcényle en C₂-C₂₂, un alcynyle en C₂-C₂₂, un aryle, éventuellement substitué par au moins un styryle, ou un alcaryle en C₆-C₂₂,
R⁴ représente H, un alkyle en C₁₋₈, hétérocyclyle, un aryle ou -(CₙH₂ₙ-A²)ₘ-R³, et
R^{4'} est un alkyle en C₁₋₈, un hétérocyclyle, un aryle ou -(CₙH₂ₙ-A²)ₘ-R³.

5. Polysiloxane selon l'une quelconque des revendications précédentes, dans lequel le polysiloxane à équilibrer à l'étape (iii) est un polydi-C₁₋₆-alkyle-siloxane, de préférence un polydiméthylsiloxane, de manière plus préférée un oligodiméthylsiloxane, de manière encore plus préférée un oligo- ou polydiméthylsiloxane cyclique.

6. Polysiloxane selon l'une quelconque des revendications précédentes, dans lequel le composé (V) est choisi parmi hexaméthylène-1,6-diisocyanate, isophoronediisocyanate, toluylène-2, 4-diisocyanate, toluylène-2,6-diisocyanate, phénylène-1,3-diisocyanate, 4,4'-méthylène-bis-(cyclohexylisocyanate), 4,4'-méthylènebis(phénylisocyanate) et diméthylphényldiisocyanate.

7. Polysiloxane selon l'une quelconque des revendications précédentes, dans lequel, dans l'étape (iv), est en outre présent au moins un composé (VI) comprenant au moins un groupe réactif avec les isocyanates, qui est de préférence choisi parmi
R⁴-(A²-CₙH₂ₙ)ₘ-A³-H,
HO-R⁵-NR⁶-R⁵-OH,
HO-R⁵-NR⁶R^{6'},
HO-R⁵(NR⁶R^{6'})₂,
HO-R⁵(NR⁶R^{6'})₃,
(HO)₂R⁵-NR⁶R^{6'},
HNR⁶R^{6'},
H₂N-R⁵-NR⁶R^{6'},
R^{6'}R⁶N-R⁵-NR⁶-R⁵-NR⁶R^{6'} et
R^{6'}R⁶N-R⁵-NR⁶-R^{6'},
où
R⁴, A², A³, n et m sont tels que définis ci-dessus,
R⁵ est indépendamment un alkyle divalent, trivalent ou tétravalent en C₁₋₈, un C₁₋₈-alkyle-O- C₁₋₈-alkyle ou un aryle, éventuellement substitué,
R⁶ est H, un alkyle en C₁₋₁₈ éventuellement substitué ou un aryle, et
R^{6'} est un alkyle en C₁₋₈ éventuellement substitué ou un aryle, ou
R⁶ et R^{6'} forment avec l'atome d'azote un hétérocycle qui peut éventuellement contenir d'autres hétéroatomes et qui est éventuellement substitué par un alkyle en C₁₋₈.

8. Polysiloxane selon l'une quelconque des revendications précédentes, dans lequel, à l'étape (iv), le rapport molaire des groupes isocyanate aux groupes réactifs avec les isocyanates est compris entre 0,4 et 1, de préférence entre 0,6 et 1.

9. Emulsion aqueuse comprenant un polysiloxane selon l'une quelconque des revendications 1 à 13, comprenant éventuellement en outre au moins un tensioactif et/ou un solvant et/ou un acide.

10. Utilisation d'un polysiloxane selon l'une quelconque des revendications 1 à 8 ou d'une émulsion selon la revendication 9 pour l'apprêtage d'étoffes ou de fibres textiles, pour le traitement du papier ou du cuir, pour des applications cosmétiques ou dans des vernis ou des lasures.

11. Etoffe ou fibre textile comprenant un polysiloxane selon l'une quelconque des revendications 1 à 8.

12. Procédé d'apprêtage d'étoffes ou de fibres textiles, comprenant l'application du polysiloxane selon l'une quelconque des revendications 1 à 8 ou de l'émulsion selon la revendication 9 sur l'étoffe ou la fibre textile.
